# EUROPEAN PATENT APPLICATION

(11) **EP 2 711 817 A2**
(43) Date of publication of application: **26.03.2014**
(21) Application number: 11789249.7
(22) Date of filing: 09.06.2011
(51) Int. Cl.: G06F 3/048

(54) **THEME DISPLAY METHOD AND DEVICE THEREOF**

(71) Applicant: Huawei Device Co., Ltd., Shenzhen, Guangdong 518129 (CN)
(72) Inventor: HUANG, Huijin, Guangdong 518129 (CN)
(74) Representative: Körber, Martin Hans
(86) International application number: PCT/CN2011/075501
(87) International publication number: WO 2011/150870

(57) **Abstract**

A theme display method and a related apparatus are disclosed. The method includes: acquiring a theme scheme selected by a user, where the theme scheme includes identification information of theme elements required for implementing the theme scheme, and a display algorithm corresponding to the theme scheme; extracting the theme elements according to the identification information; and setting a display effect of the theme elements by using the display algorithm, and displaying the theme elements in a display apparatus.

## Description

### TECHNICAL FIELD

The present invention relates to the display field of mobile terminals, and in particular, to a theme display method and a related apparatus.

### BACKGROUND

In an operation interface of a mobile terminal, generally, theme content of the operation interface affects user experience directly. A theme of the operation interface may include different color schemes and different theme elements (where the theme elements may include: a picture, a font, and the like). Different themes may be formed by combining different color schemes and different theme elements, thereby avoiding a dull operation interface and catering to an individual need of a user.

However, limited by hardware performance of a mobile terminal, the mobile terminal cannot introduce different theme elements excessively. With limited performance of the mobile terminal, in the prior art, an actual effect of a theme can be changed only by simply modifying a color scheme of a theme background, for example, a color of the theme background is changed by adjusting an RGB color value. Such color scheme modification is easy to be implemented, but a modification means is too monotonous, and a modification effect is dull and inflexible. Obviously, it is difficult to satisfy a need of the user.

### SUMMARY

Embodiments of the present invention provide a theme display method and a related apparatus, which are used to implement diversified display themes in a limited hardware condition of a mobile terminal.

A theme display method provided in the present invention includes: acquiring a theme scheme selected by a user, where the theme scheme includes identification information of theme elements required for implementing the theme scheme, and a display algorithm corresponding to the theme scheme; extracting the theme elements according to the identification information; and setting a display effect of the theme elements by using the display algorithm, and displaying the theme elements in a display apparatus.

A theme display apparatus provided in the present invention includes: an acquiring unit, configured to acquire a theme scheme selected by a user, where the theme scheme includes identification information of theme elements required for implementing the theme scheme, and a display algorithm corresponding to the theme scheme; an extracting unit, configured to extract the theme elements according to the identification information; and a setting unit, configured to set a display effect of the theme elements by using the display algorithm, and display the theme elements in the display apparatus.

It can be seen from the foregoing technical solutions that, the embodiments of the present invention have the following advantages: The theme display apparatus in the present invention has multiple theme schemes, where the theme schemes are formed by combining different theme elements according to different display algorithms. After acquiring a theme scheme selected by a user, the theme display apparatus extracts theme elements required for implementing the theme scheme, and sets a display effect by using a display algorithm corresponding to the theme scheme. In this way, in limited storage space of a mobile terminal, limited theme elements may be converted in different combination manners and through different display algorithms, thereby obtaining abundant display effects, and satisfying a diversification need of the user.

### BRIEF DESCRIPTION OF DRAWINGS

FIG. 1 is a schematic flowchart of a theme display method according to an embodiment of the present invention;
FIG. 2 is another schematic flowchart of a theme display method according to an embodiment of the present invention; and
FIG. 3 is a schematic diagram of a logical structure of a theme display apparatus according to an embodiment of the present invention.

### DESCRIPTION OF EMBODIMENTS

Embodiments of the present invention provide a theme display method and a related apparatus, which are used to implement diversified display themes in a limited hardware condition of a mobile terminal.

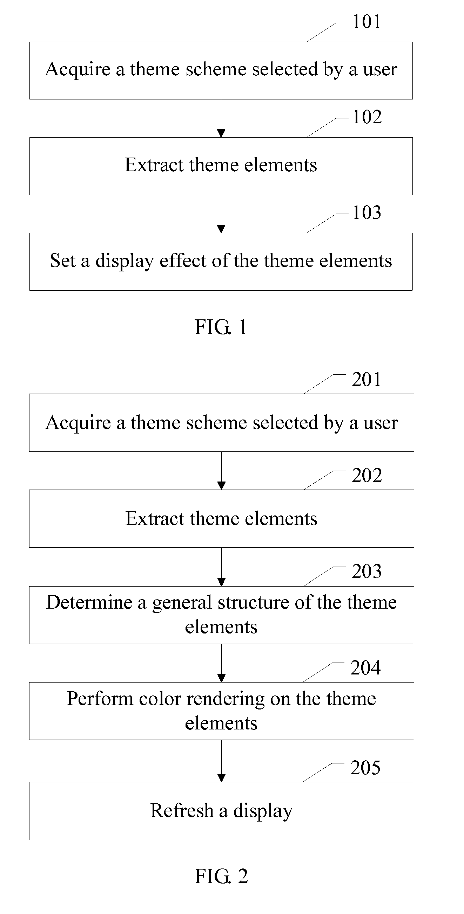

Referring to FIG. 1, an embodiment of the theme display method according to the embodiments of the present invention includes:
101: Acquire a theme scheme selected by a user.

A theme display apparatus acquires the theme scheme selected by the user, where the theme scheme includes identification information of theme elements required for implementing the theme scheme, and a display algorithm corresponding to the theme scheme.

When the user wants to switch a display effect of an operation interface, the user may select a required theme scheme through the operation interface of a mobile terminal, where the theme scheme may include: a system-level theme scheme and a user-defined theme scheme. The system-level theme scheme is a complete theme scheme pre-configured in the theme display apparatus, and in the system-level theme scheme, elements such as a theme background, a theme icon, a display font, and a color effect are fixedly matched. However, in the user-defined theme scheme, elements such as a theme background, a theme icon, a display font, and a color effect may be selected and matched freely by the user. It can be understood that, a specific implementation manner of the theme scheme may be determined according to an actual situation (for example, whether a system chip of the mobile terminal has an operational capability of selecting multiple elements and matching them freely), and is not limited herein.

102: Extract the theme elements.

The theme display apparatus extracts, according to the identification information, the theme elements required for implementing the theme scheme from an element library.

After acquiring the theme scheme, the theme display apparatus learns, by parsing the theme scheme, what theme elements are specifically required for implementing the theme scheme, and then extracts corresponding theme elements from the element library. The theme elements may include: a theme background, a theme icon, a display font, and the like, where the theme background and the theme icon are mainly formed by a picture, and the theme icon may be some borders or link icons.

103: Set a display effect of the theme elements.

The theme display apparatus sets the display effect of the extracted theme elements by using the display algorithm corresponding to the theme scheme, and displays the theme elements in the display apparatus.

After extracting the theme elements required for implementing the theme scheme, the theme display apparatus first combines the theme elements according to the display algorithm, distributes positions for the theme elements, and determines a general outline of the theme scheme; then performs color conversion on the theme elements according to a color effect formulated in the display algorithm; and finally, refreshes a display and displays the processed theme elements on the display.

The theme display apparatus in the present invention has multiple theme schemes, where the theme schemes are formed by combining different theme elements according to different display algorithms. After acquiring a theme scheme selected by a user, the theme display apparatus extracts theme elements required for implementing the theme scheme, and sets a display effect by using a display algorithm corresponding to the theme scheme. In this way, in limited storage space of a mobile terminal, limited theme elements may be converted in different combination manners and through different display algorithms, thereby obtaining abundant display effects, and satisfying a diversification need of the user.

In an actual operation, in the present invention, different display patterns and display colors may also be set according to a specific algorithm such as a theme structure algorithm and a color conversion algorithm. Referring to FIG. 2, another embodiment of the theme display method according to the embodiments of the present invention includes:

201: Acquire a theme scheme selected by a user.

Content of step 201 in this embodiment is the same as content of step 101 in the embodiment shown in FIG. 1, and is not repeatedly described herein.

202: Extract the theme elements.

The theme display apparatus extracts, according to the identification information, the theme elements required for implementing the theme scheme from an element library, where the theme elements may include: a theme background, a theme icon, a display font, and the like, which is specifically as follows:

The theme display apparatus first learns, by parsing the theme scheme, what theme elements are specifically required for implementing the theme scheme, and then extracts corresponding theme elements from the element library. Because a theme background and a theme icon are mainly formed by a picture, a picture corresponding to the theme icon and a picture required for forming the theme background need to be extracted, where the theme background may be formed by more than one picture.

203: Determine a general structure of the theme elements.

The theme display apparatus determines a structure of the theme elements by using a theme structure algorithm.

The display algorithm may include: a theme structure algorithm, a color conversion algorithm, and an effect conversion algorithm. When setting a display effect of the theme elements, the theme display apparatus first determines the structure of the theme elements according to the theme structure algorithm, which is specifically as follows:

1: Set a theme background by using the extracted picture of the theme background. If the theme background is formed by at least two pictures, the pictures forming the theme background are overlaid according to the theme structure algorithm, to obtain the theme background. Because the theme background may be formed separately by one picture, and may also be formed by several overlaid pictures, a method for overlaying the pictures may be transparent overlay or coverage overlay, where different overlay methods may achieve different actual effects. Transparent overlay of multiple kinds of pictures may enrich a sense of gradation of the theme background, while overlay of different pictures may also enable the theme background to have different display effects, which provides a plenty of options for the user, thereby improving user experience.

2: Locate a theme icon on the theme background by using the extracted picture corresponding to the theme icon, where the theme icon may include: a border or a link icon.

204: Perform color rendering on the theme elements.

The theme display apparatus acquires original colors of the theme elements, and performs color rendering, by using a corresponding color scheme in the color conversion algorithm, on the theme elements of which the structure is determined, where the color scheme may include: grayscale, black and white, bright-colored, retro style, and single tone conversion.

The theme elements are mainly formed by pictures, and pictures stored in the element library of the theme display apparatus have their own original colors. To enrich presentation effects of colors in a theme, in the present invention, a color value of an original picture may be changed through the color conversion algorithm, thereby achieving different color display effects.

There are multiple color conversion algorithms. For example, single tone conversion is used as follows: A theme element is originally of red, and a color of the theme element is RGB₁ (Vᵣ, V_{g}, V_{b}). If the theme scheme selected by the user is a theme of green, the theme display apparatus first acquires an original color of the theme element, and then circularly shifts each color component in the original color RGB₁ (Vᵣ, V_{g}, V_{b}) to the right by using a color conversion algorithm of green, to obtain RGB₂ (V_{b}, Vᵣ, V_{g}). In this way, a color of a theme element of red may be converted to a color of a theme element of green.

For another example, grayscale conversion is used as follows: A theme element is multicolor, and a color of the theme element is RGB₁ (Vᵣ, V_{g}, V_{b}). If the user selects a grayscale theme scheme, the theme display apparatus first acquires an original color of the theme element, and then performs weighted averaging on each color component in the original color RGB₁ (Vᵣ, V_{g}, V_{b}), and calculates a grayscale value V_{d} = α*Vᵣ+β*V_{g}+γ*V_{b} (where α, β, and γ are pre-defined weights in the color conversion algorithm), to obtain converted grayscale RGB₂ (V_{d}, V_{d}, V_{d}).

Optionally, after the structure of the theme elements in the theme scheme is determined, the display effect of the pictures may be further converted by using a digital image processing technology, for example, an edge of an image in the theme scheme is sharpened or blurred, or ink painting or etching or other processing is performed, so as to enrich the display effect.

205: Refresh a display.

After completing conversion of the display effect of the theme elements, the theme display apparatus refreshes the display, and displays, on the display, the theme scheme selected by the user.

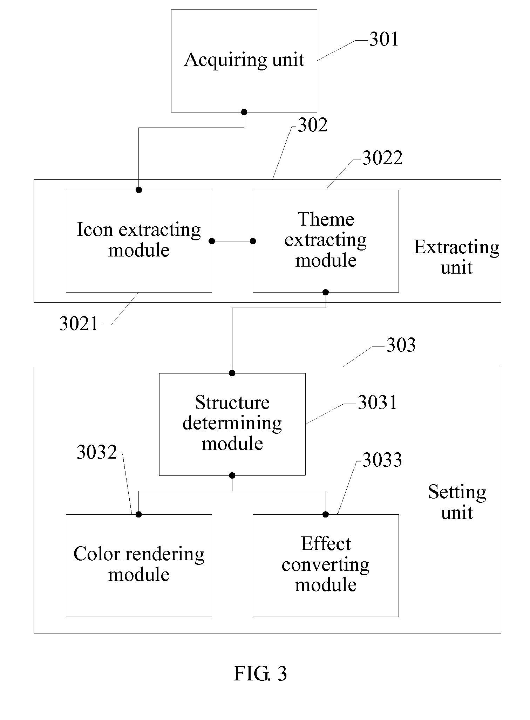

The following describes an embodiment of a theme display apparatus in the present invention that is used to execute the foregoing theme display method. For a logical structure, refer to FIG. 3. An embodiment of the theme display apparatus according to the embodiments of the present invention includes:
an acquiring unit 301, configured to acquire a theme scheme selected by a user, where the theme scheme includes identification information of theme elements required for implementing the theme scheme, and a display algorithm corresponding to the theme scheme;
an extracting unit 302, configured to extract, according to the identification information, the theme elements required for implementing the theme scheme; and
a setting unit 303, configured to set a display effect of the theme elements by using the display algorithm, and display the theme elements in the display apparatus.

In the embodiment of the present invention, the setting unit 303 may include:
a structure determining module 3031, configured to determine a structure of the theme elements by using a theme structure algorithm in the display algorithm;
a color rendering module 3032, configured to, after the structure determining unit determines the structure of the theme elements, perform color rendering on the theme elements by using a color conversion algorithm in the display algorithm; and
an effect converting module 3033, configured to process, according to an effect conversion algorithm in the display algorithm, image edges of the theme elements of which the structure is determined, where the effect conversion algorithm includes edge sharpening or edge blurring.

In the embodiment of the present invention, the extracting unit 302 may include:
an icon extracting module 3021, configured to extract a picture corresponding to a theme icon in the theme elements; and
a theme extracting module 3022, configured to extract a picture required for forming a theme background in the theme elements.

In the embodiment of the present invention, a specific interaction process between the units of the theme display apparatus is as follows:

When the user wants to switch a display effect of an operation interface, the user may select a required theme scheme through the operation interface of a mobile terminal, and the acquiring unit 301 of the theme display apparatus acquires the theme scheme selected by the user, where the theme scheme is formed by combining different theme elements according to different display algorithms, and the theme scheme includes a corresponding display algorithm.

After the theme scheme is acquired, the extracting unit 302 learns, by parsing the theme scheme, what theme elements are specifically required for implementing the theme scheme, and then extracts corresponding theme elements from an element library. Because a theme background and a theme icon are mainly formed by a picture, a process of extracting the theme elements is specifically as follows: The icon extracting module 3021 extracts a picture corresponding to a theme icon in the theme elements, and the theme extracting module 3022 extracts a picture required for forming a theme background in the theme elements.

After the theme elements for implementing the theme scheme are extracted, the structure determining module 3031 of the setting unit 303 determines a structure of the theme elements by using a theme structure algorithm. If the theme background is formed by at least two pictures, the pictures forming the theme background are overlaid according to the theme structure algorithm, to obtain the theme background. Because the theme background may be formed separately by one picture, and may also be formed by several overlaid pictures, a method for overlaying the pictures may be transparent overlay or coverage overlay, where different overlay methods may achieve different actual effects. Transparent overlay of multiple kinds of pictures may enrich a sense of gradation of the theme background, while overlay of different pictures may also enable the theme background to have different display effects, which provides a plenty of options for the user, thereby improving user experience. The structure determining module 3031 locates a theme icon on the theme background by using the extracted picture corresponding to the theme icon, where the theme icon may include: a border or a link icon.

After the structure of the theme elements is determined, the color rendering module 3032 acquires original colors of the theme elements, and performs, by using a corresponding color scheme in the color conversion algorithm, color rendering on the theme elements of which the structure is determined, where the color scheme may include: grayscale, black and white, bright-colored, retro style, and single tone conversion.

The theme elements are mainly formed by pictures, and pictures stored in the element library of the theme display apparatus have their own original colors. To enrich presentation effects of colors in a theme, in the present invention, a color value of an original picture may be changed through the color conversion algorithm, thereby achieving different color display effects. There are multiple color conversion algorithms. For example, single tone conversion is used as follows: A theme element is originally of red, and a color of the theme element is RGB₁ (Vᵣ, V_{g}, V_{b}). If the theme scheme selected by the user is a theme of green, the theme display apparatus first acquires an original color of the theme element, and then circularly shifts each color component in the original color RGB₁ (Vᵣ, V_{g}, V_{b}) to the right by using a color conversion algorithm of green, to obtain RGB₂ (V_{b}, Vᵣ, V_{g}). In this way, a color of a theme element of red may be converted to a color of a theme element of green.

Optionally, after the structure of the theme elements in the theme scheme is determined, the effect converting module 3033 may further process, according to the effect conversion algorithm, image edges of the theme elements of which the structure is determined, where the effect conversion algorithm includes edge sharpening or edge blurring.

After completing conversion of the display effect of the theme elements, the theme display apparatus refreshes a display, and displays, on the display, the theme scheme selected by the user.

In the embodiments provided in the present application, it should be understood that the disclosed apparatus and method may be implemented in other manners. For example, the described apparatus embodiment is merely exemplary. For example, dividing of the units is merely a kind of logical function dividing, and there may be other dividing manners during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separated, and parts shown as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such understanding, the technical solutions of the present invention essentially, or the part contributing to the prior art, or all or a part of the technical solutions may be embodied in a form of a software product. The computer software product is stored in a storage medium, and includes several instructions for instructing a computer device (which may be a personal computer, a server, or a network device, or the like) to perform all or a part of the steps of the methods described in the embodiments of the present invention. The foregoing storage medium includes: any medium that is capable of storing program codes, such as a USB flash disk, a removable hard disk, a read-only memory (ROM, Read-Only Memory), a random access memory (RAM, Random Access Memory), a magnetic disk, or an optical disk.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A theme display method, comprising:
acquiring a theme scheme selected by a user, wherein the theme scheme comprises identification information of theme elements required for implementing the theme scheme, and a display algorithm corresponding to the theme scheme;
extracting the theme elements according to the identification information; and
setting a display effect of the theme elements by using the display algorithm, and displaying the theme elements in a display apparatus.

2. The method according to claim 1, wherein the display algorithm comprises:
a theme structure algorithm and a color conversion algorithm; and
the setting a display effect of the theme elements by using the display algorithm comprises:
determining a structure of the theme elements by using the theme structure algorithm; and
performing, by using the color conversion algorithm, color rendering on the theme elements of which the structure is determined.

3. The method according to claim 2, wherein
the theme elements comprise: a theme background and a theme icon, wherein the theme background is formed by more than one picture; and
the extracting the theme elements according to the identification information comprises:
extracting a picture corresponding to the theme icon, and a picture required for forming the theme background.

4. The method according to claim 3, wherein the determining a structure of the theme elements by using the theme structure algorithm comprises:
if the theme background is formed by at least two pictures, overlaying, according to the theme structure algorithm, the pictures forming the theme background, to obtain the theme background; and
locating the theme icon on the theme background according to the theme structure algorithm.

5. The method according to claim 3 or 4, wherein the performing, by using the color conversion algorithm, color rendering on the theme elements of which the structure is determined comprises:
acquiring original colors of the theme elements, wherein the original colors comprise three color components; and
adjusting the three color components by using a color scheme corresponding to the color conversion algorithm, wherein the color scheme comprises: grayscale, black and white, bright-colored, retro style, and single tone conversion.

6. The method according to claim 4, wherein
the display algorithm further comprises: an effect conversion algorithm; and
after the locating the theme icon on the theme background according to the theme structure algorithm, the method comprises:
processing, according to the effect conversion algorithm, image edges of the theme elements of which the structure is determined, wherein the effect conversion algorithm comprises edge sharpening or edge blurring.

7. A theme display apparatus, comprising:
an acquiring unit, configured to acquire a theme scheme selected by a user, wherein the theme scheme comprises identification information of theme elements required for implementing the theme scheme, and a display algorithm corresponding to the theme scheme;
an extracting unit, configured to extract the theme elements according to the identification information; and
a setting unit, configured to set a display effect of the theme elements by using the display algorithm, and display the theme elements in the display apparatus.

8. The apparatus according to claim 7, wherein the setting unit comprises:
a structure determining module, configured to determine a structure of the theme elements by using a theme structure algorithm in the display algorithm;
a color rendering module, configured to, after the structure determining unit determines the structure of the theme elements, perform color rendering on the theme elements by using a color conversion algorithm in the display algorithm; and
an effect converting module, configured to process, according to an effect conversion algorithm in the display algorithm, image edges of the theme elements of which the structure is determined, wherein the effect conversion algorithm comprises edge sharpening or edge blurring.

9. The apparatus according to claim 8, wherein the extracting unit comprises:
an icon extracting module, configured to extract a picture corresponding to a theme icon in the theme elements; and
a theme extracting module, configured to extract a picture required for forming a theme background in the theme elements.

10. The apparatus according to claim 8, wherein
the structure determining module is further configured to, if the theme background is formed by at least two pictures, overlay, according to the theme structure algorithm, the pictures forming the theme background, to obtain the theme background; and locate the theme icon on the theme background according to the theme structure algorithm.
